Europäisches Patentamt

European Patent Office

Office européen des brevets

(19)

(11) EP 0 585 991 B1

(12) # EUROPEAN PATENT SPECIFICATION

(45) Date of publication and mention
of the grant of the patent:
**04.03.1998 Bulletin 1998/10**

(51) Int Cl.6: **G11B 20/10**, H04L 25/03

(21) Application number: **93202241.1**

(22) Date of filing: **29.07.1993**

(54) **Arrangement for reproducing a digital signal from a record carrier, comprising a variable equalizer**

Einrichtung zur Wiedergabe eines digitalen Signals von einem Aufzeichnungsträger mit einem variablen Entzerrer

Dispositif de lecture d'un signal numérique sur un support d'enregistrement, comportant un correcteur variable

(84) Designated Contracting States:
**AT BE DE FR GB**

(30) Priority: **06.08.1992 EP 92202427**

(43) Date of publication of application:
**09.03.1994 Bulletin 1994/10**

(73) Proprietor: **Philips Electronics N.V.
5621 BA Eindhoven (NL)**

(72) Inventor: **van den Enden, G.J.,
c/o INT. OCTROOIBUREAU B.V.
NL-5656 AA Eindhoven (NL)**

(74) Representative:
**van der Kruk, Willem Leonardus et al
INTERNATIONAAL OCTROOIBUREAU B.V.,
Prof. Holstlaan 6
5656 AA Eindhoven (NL)**

(56) References cited:
**EP-A- 0 387 813          EP-A- 0 454 445
US-A- 4 564 869**

- **PATENT ABSTRACTS OF JAPAN vol. 12, no. 361 (P-763)28 September 1988 & JP-A-63 112 872 (MATSUSHITA ELECTRIC IND CO LTD) 17 May 1988**

**Description**

The invention relates to an arrangement as per the pre-characterizing parts of the claims 1 and 5. Such an arrangement is known from EP-A 454,445.

In the known arrangement equalization is realized by varying the filter parameters in response to three control signals supplied to control signal inputs of the variable equalizer means, such that the filter response is controlled.

European patent application no. 91203350.3 describes an equalization of magnitude and phase, on the basis of a first and a second control signal respectively. Further, European patent application no. 92 202 428.6 filed at the same date as the present application describes some ways in which the first and the second control signals can be derived.

The invention has for its object to provide for variable equalizer means that realize an equalization of magnitude and phase on the basis of the first and second control signal.

The arrangement in accordance with the invention for reproducing a digital signal from a track on a record carrier, the arrangement comprising

- read means including a read head, for reading a signal from the track,
- variable equalizer means, having an input coupled to an output of the read means, first and second control signal inputs for receiving a first and a second control signal respectively and an output for supplying an equalized output signal in response to the first and the second control signal, the variable equalizer means being adapted to equalize the transmission characteristic of the transmission path including the recording channel up to the input of the variable equalizer means in response to the first and the second control signal, the first control signal having a relation with the high frequency losses in the magnitude transmission characteristic of the transmission path and the second control signal having a relation with the difference in delay caused by the transmission in said transmission path between the low frequency signals and high frequency signals in the operating frequency range of the transmission path, the variable equalizer means comprising digital filter means,
- equalizer control signal generator means having a first and a second output for supplying the first and second control signal respectively, which first and second outputs are coupled to the first and second control signal input respectively of the equalizer means,
- an output terminal coupled to the output of the variable equalizer means for supplying the digital signal, the variable equalizer means comprising finite impulse response filter means, the FIR filter means comprising
- delay line means having a number of N taps,
- multiplier means for multiplying a signal present at the n-th tap of the delay line means by a multiplication factor a(n) and for supplying the multiplied signal to
- signal combining means, an output of the signal combining means being coupled to the output of the variable equalizer means,

the variable equalizer means further comprising multiplication factor generator means for generating the multiplication factors a(n) in response to the first and second control signal, is characterized in that the multiplication factor generator means comprises multiplication factor calculating means, the said multiplication factor calculating means being adapted to calculate at least a number of the N multiplication factors a(n) in accordance with the following formula:

$$a(n) = A1(n) + A2(n)*HF + A3(n)*PHI + A4(n)*HF*PHI,$$

for PHI having a value lying in a first value range,

where HF is the value of the first control signal, PHI is the value of the second control signal, Al(n), A2(n), A3(n) and A4(n) being constants for each multiplication factor a(n), memory means being available for storing at least a number of said constants, and
where n lies in a range from 0 to N-1 inclusive.

In this situation, the variable equalizer filter means comprise a single FIR filter means, and the multiplication factors (or coefficients) for the FIR filter means are computed using the formula given. There are situations where, in the value range of occurrence for the second control signal, the filter coefficients can be calculated using one set of constants. If the value range of occurrence for the second control signal is larger, it may become necessary to use a second, or even a third, set of constants in the formula given, for calculating the filter coefficients.

In a second embodiment, the arrangement as per the pre-characterizing part is characterized in that the multiplication factor calculating means being further adapted to calculate the multiplication factors a(n) in accordance with the following formula:

$$a(n) = C1(n) + C2(n)*HF + C3(n)*PHI + C4(n)*HF*PHI,$$

for PHI having a value lying in a third value range not overlapping the first and the second value range, where C1(n), C2(n), C3(n) and C4(n) are constants for each multiplication factor a(n), the memory means being further adapted to store at least a number of said constants C1(n) to C4(n).

In this situation, the variable equalizer filter means comprise a first and a second FIR filter means. The first FIR filter means is controlled by the first control signal only, and the second FIR filter means is controlled by the second control signal only. The coefficients for the FIR filter means are computed using the formulae given. In the same way as explained above, there are situations where, in the value range of occurrence for the second control signal, the filter coefficients for the second FIR filter means can be calculated using one set of constants. Again, if the value range of occurrence for the second control signal becomes larger, it may become necessary to use a second, or even a third set of constants to calculate the coefficients for the second FIR filter means.

These and other aspects of the invention will be apparent from and elucidated with reference to the embodiments described hereafter, in which

figure 1 shows the magnetic recording/reproduction channel,
figure 2 shows in figure 2a the magnitude and figure 2b the phase as a function of frequency of the recording channel,
figure 3 shows in figure 3a an ideal impulse response signal and in figure 3b the actual impulse response signal,
figure 4 in figure 4a the magnitude and in figure 4b the phase of the variable equalizer means as a function of frequency,
figure 5 in figure 5a and 5b signals read out in response to a positive or negative going transition in the magnetization respectively,
figure 6 a first embodiment of the variable equalizer means in accordance with the invention,
figure 7 two examples of a noise shaping filter used in a magnetic reproduction channel,
figure 8 an example of the filter characteristic, as regards magnitude (figure 8a) and phase (figure 8b) realized by the variable equalizer means,
figure 9 the impulse response of the filter characteristic of figure 8,
figure 10 the behaviour of a number of multiplication coefficients as a function of HF and PHI,
figure 11 a table with the constants necessary for calculating the multiplication factors,
figure 12 a second embodiment of the variable equalizer means in accordance with the invention, and
figure 13 a table with the constants necessary for calculating the multiplication factors for the second embodiment.

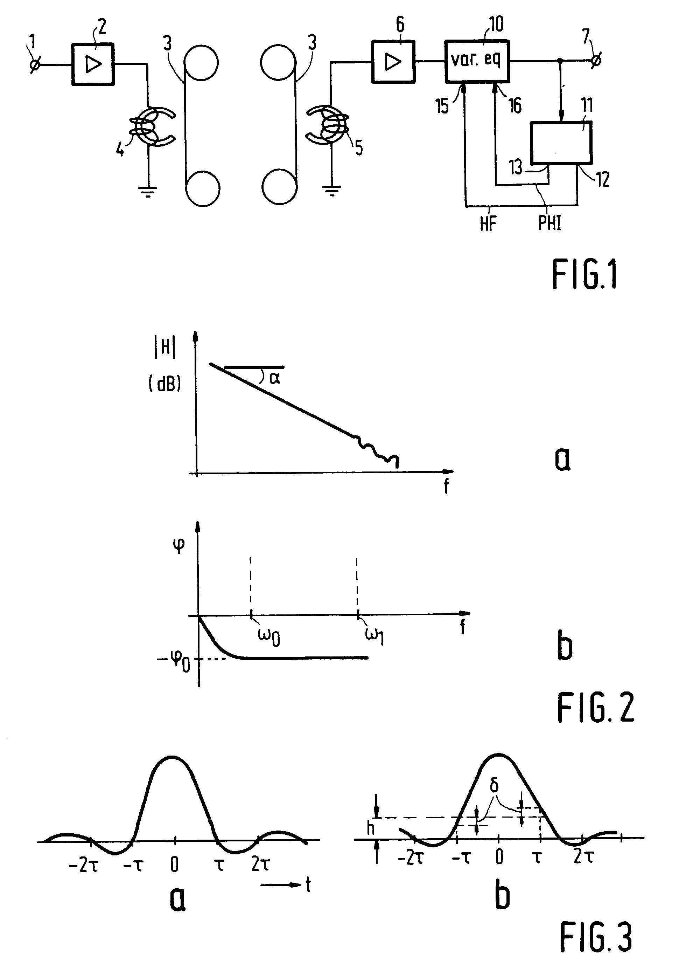

Figure 1 shows the recording/reproduction channel, where an input signal is applied to an input terminal 1, and is recorded, after pre-amplification in a recording amplifier 2 on a magnetic record carrier 3 by means of a recording head 4. Reproduction is carried out by means of a reproducing head 5, so that the signal reproduced can be amplified in an amplifier 6, after which the signal is applied to an input of variable equalizer means 10. The reproducing arrangement further comprises equalizer control signal generator means 11. The equalizer control signal generator means have an input coupled to the output of the variable equalizer means 10 and have a first and a second output 12 and 13 respectively, for supplying a first control signal HF to a first control signal input 15 of the variable equalizer means 10, and a second control signal PHI to a second control signal input 16 the equalizer means 10.

It should be noted that the input of the control signal generator means 11 need not necessarily be coupled to the output of the variable equalizer, but can, if needed, be coupled to a point earlier in the reproduction channel.

The variable equalizer means 10 is adapted to equalize the transmission characteristic of the transmission path including the recording channel up to the input of the variable equalizer means 10 in response to the first and the second control signal. The first control signal has a relation with the high frequency losses in the magnitude transmission characteristic of the transmission path. The first control signal is thus related to the declination angle $\alpha$ of the magnitude curve of figure 2a. The second control signal has a relation with the difference in delay caused by the transmission in said transmission path between the low frequency signals and high frequency signals in the operating frequency range of the transmission path.

This can be explained as follows.

The transmission characteristic of the recording/reproduction channel can be measured by applying an impulse like signal to the input terminal 1 and measuring the signal obtained at the input of the variable equalizer means 10, after having recorded the signal on the record carrier 3, and after having reproduced the signal.

Figure 2 shows the magnitude of the transmission characteristic of the transmission path including the recording channel up to the input of the variable equalizer means 10, expressed in dB as a function of the frequency which is plotted on a linear scale. The magnitude is a more or less straight line which descends for increasing frequencies. The declination angle of the line is indicated by $\alpha$.

Figure 2b shows the phase difference as a function of frequency between the actual response signal present at the input of the variable equalizer means 10 and the required response signal at the said input, which response signal is the signal in response to the above identified impulse like signal applied to the input 1. The curve shows a constant phase difference $\phi = -\phi_0$ as a function of frequency. More generally, the phase difference equals $\phi = -\phi_0 - \omega T_c$, where $T_c$ is a delay which is constant for all frequencies.

The delay for a low frequency signal having a frequency $\omega_0$ is defined as $-\phi/\omega_0$. This delay thus equals $\phi_0/\omega_0 + T_c$. The delay for a high frequency signal having a frequency $\omega_1$ equals $\phi_0/\omega_1 + T_c$. The difference in delay thus equals $\phi_0/\omega_0 - \phi_0/\omega_1$. The common delay of $T_c$ has disappeared and thus play no relevant role in the calculation. In the case where $\omega_1 = m \times \omega_0$, where m is larger than zero, the difference in delay equals $\phi_0\{(m - 1)/m\}/\omega_0$. The difference in delay thus bears a relationship with the phase difference $-\phi_0$ given in figure 2b. The meaning of this difference in delay is, that low(er) frequencies are more delayed than high(er) frequencies. As a result, if the symmetric response given in figure 3a is to be expected, the asymmetric response of figure 3b will be the actual response. The ideal response of figure 3a shows a response having zero value at the sampling instants $t=\tau$ and $t=-\tau$. The actual response shows at the instant $t=\tau$ a non-zero value of $h+\delta$ and at the instant $t=-\tau$ a non-zero value of $h-\delta$. The symmetric component h in both non-zero values stems from the non-flat magnitude characteristic of figure 2a, and the non-symmetric component of $\delta$ and $-\delta$ in the values results from the phase difference $-\phi_0$ in figure 2b.

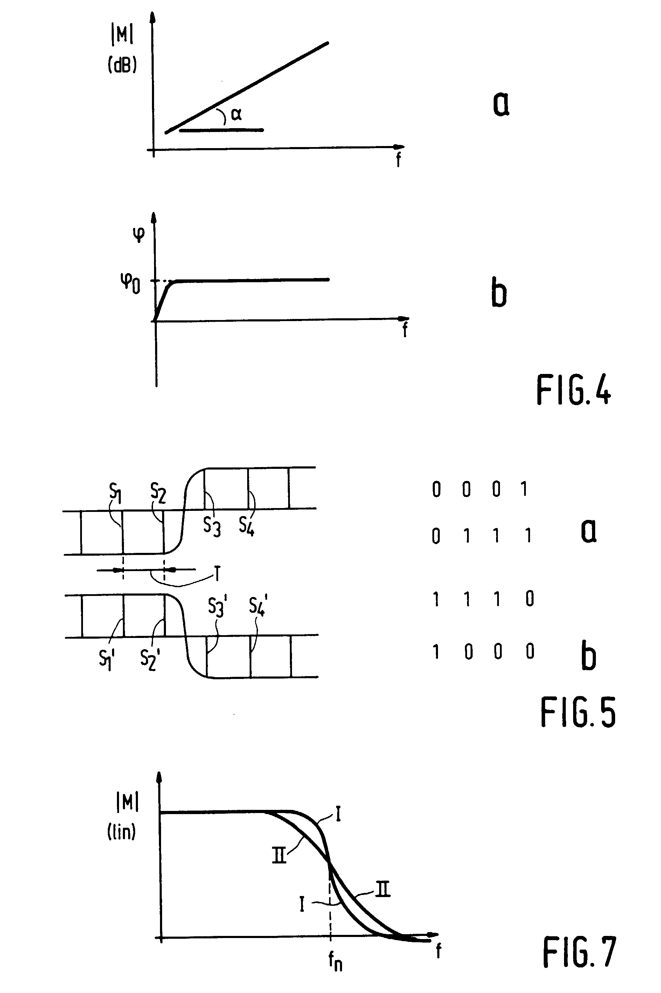

In response to the first control signal HF and the second control signal PHI, applied to the variable equalizer means 10, the equalizer means 10 realize a frequency response characteristic as regards magnitude and phase, such that it equalizes the transmission path. This means effectively, that the filter means realize a magnitude characteristic as a function of frequency as given in figure 4a. This characteristic is in the form of a substantially straight line which ascends for increasing frequencies. The inclination angle of the line is a. Further, the phase characteristic as a function of frequency of the variable equalizer means is as given in figure 4b. It realizes a phase characteristic of $\phi_0$.

As a result of the equalization, the magnitude characteristic will become a substantially horizontal line, and the phase will become zero for all frequencies, so that no difference in delay between the low(er) and the high(er) frequencies is present.

It should be noted that the arrangement can include a fixed equalizer (not shown) coupled in the reproduction channel between the reproduction head 5 and the input of the variable equalizer 10. Such fixed equalizer can compensate for the average HF loss, given by the angle $\alpha$ in figure 2a, so that the variable equalizer need to compensate for the deviations from that angle $\alpha$ only, which makes the variable equalizer simpler, and makes the equalization by the variable equalizer simpler.

European application no. 583,818, which corresponds to the earlier mentioned European application no 92 202 428.6, shows various embodiments of the control signal generator means 11 to obtain the first and the second control signal.

The derivation of the first and the second control signal in this application is based on the detection of step transitions in the magnetization on tape. When carrying out a full response detection during reproduction, a positive or negative going step transition results in a more or less ideal step response in the signal read from tape, such as given in figure 5a and 5b respectively. The deviation of the step response from the ideal response is an indication of the non-ideal character of the recording channel, as regards magnitude and phase.

In correspondence with the teachings of the European application no. 92 202 428.6, the first control signal HF can be derived from the samples in the signals of figure 5a or 5b in the following way.

In the case of a positive going transition, as per figure 5a, a value hf(t) that equal $(s_4 - s_3) + (s_2 - s_1)$ is calculated. In the case of the negative going transition of figure 5b, the value hf(t) is calculated using the following formula:

$$-[(s_4' - s_3') + (s_2' - s_1')].$$

$s_1$ to $s_4$ and $s_1'$ to $s_4'$ are the sample values of the samples in the signals of figure 5a and 5b that ly directly around the positive and negative going transition respectively. The samples have a spacing T in time which equals the bit time in the signal read from the tape. The samples can be obtained in a synchronous detection of the signal read out, but an asynchronous detection is equally well possible.

The first control signal HF is now obtained when integrating the hf(t) values for subsequently detected signal transitions.

In correspondence with the teachings of the European application no. 583,818, the second control signal PHI can be derived from the samples in the signals of figure 5a or 5b in the following way.

In the case of a positive going transition, as per figure 5a, a value phi(t) is calculated using the formula:

$$(s_4 - s_{3)} - (s_2 - s_1).$$

In the case of the negative going transition of figure 5b, the value phi(t) is calculated using the following formula:

$$-[(s_4' - s_3') - (s_2' - s_1')].$$

The second control signal PHI is now obtained by integrating the phi(t) values for subsequently detected signal transitions. Consequently PHI directly relates to the phase $\phi_0$ as per figure 2b.

The accuracy of the calculation of the second control signal as explained above, is not always sufficient. Further, low frequency components in the signal read out can deteriorate the generation of the second control signal. It is therefore sometimes advisable to derive the second control signal in a different way. In that situation, it suffices to calculate phi(t) using the formula: $-(s_3 + s_2)$ for the positive going transition, and $s_3' + s_2'$ for the negative going transition. Again another way of deriving phi(t) is to sum all sample values $s_1$ to $s_4$ or $s_1'$ to $s_4'$.

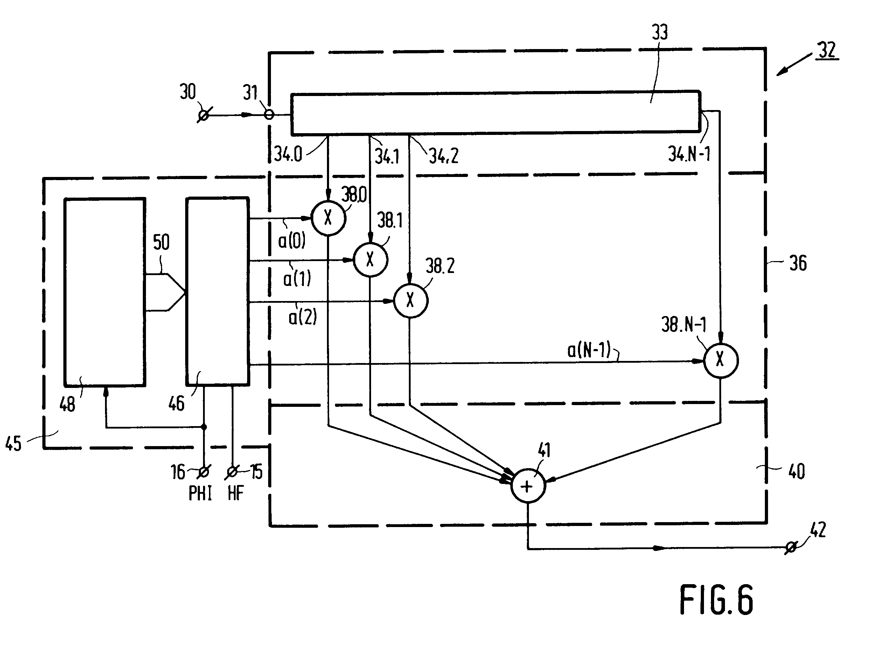

Figure 6 shows a first embodiment of the variable equalizer means 10. The input 30 of the equalizer means is coupled to an input 31 of finite impulse response filter means 32. The FIR filter means 32 comprise a delay line 33 having N taps 34.0 to 34.N-1, multiplier means 36 having N multipliers 38.0 to 38.N-1 and signal combining means 40 in the form of an adder 41. An output of the adder is coupled to the output 42 of the equalizer means 10. The N taps are located equidistantly in time along the delay line 33. The delay time between the input 31 of the delay line 33 and the first tap 34. can be zero.

The N taps 34.0 to 34.N-1 are each coupled to a first input of a corresponding one of the multipliers 38.0 to 38.N-1. Each one multiplier 38.n of the N multipliers 38.0 to 38.N-1 receives a multiplication factor a(n) at a second input. Multiplication factor generator means 45 comprising multiplication factor calculating means 46 are present to calculate the multiplication factors a(n). The multiplication factor calculating means 46 calculate the multiplication factors a(n) in accordance with the following formulae:

$$a(n) = A1(n) + A2(n)*HF + A3(n)*PHI + A4(n)*HF*PHI,$$

for PHI having a value lying in a first value range,

$$a(n) = B1(n) + B2(n)*HF + B3(n)*PHI + B4(n)*HF*PHI,$$

for PHI having a value lying in a second value range not overlapping the first value range, and

$$a(n) = C1(n) + C2(n)*HF + C3(n)*PHI + C4(n)*HF*PHI,$$

for PHI having a value lying in a third value range not overlapping the first and the second value range. n runs from 0 to N-1 inclusive.

The parameters HF and PHI are applied to the calculating means 46 via the control signal inputs 15 and 16 respectively.

A1(n), A2(n), A3(n), A4(n), B1(n), B2(n), B3(n), B4(n), C1(n), C2(n), C3(n) and C4(n) are constants for each multiplication factor a(n). Those constants are stored in a memory 48. The control signal input 16 is also coupled to the memory 48 so as to indicate which one of the three sets of constants should be used for the calculation of the multiplication factors a(n). The set of constants selected is applied to the calculating means 46 via the coupling 50. It should be noted that not all the constants need to be stored, because of the fact that sometimes multiplication factors can be derived from constants stored for other multiplication factors. This will be further explained at a later stage.

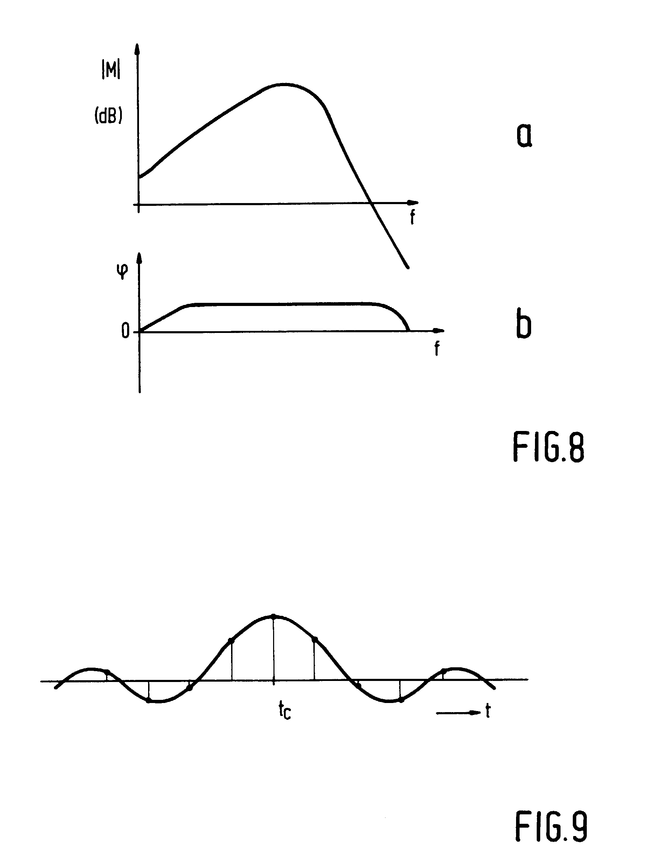

In order to realize, by means of the FIR filter 32, a filter characteristic as regards magnitude and phase that can equalize the transmission path including the recording channel up to the input of the variable equalizer means 10, the FIR filter 32 must be able to realize filters having magnitude characteristics as given in figure 4a, where $\alpha$ is the varying parameter, and phase characteristics as given in figure 4b, where $\phi_0$ is the varying parameter. Further, in order to realize a limitation in bandwidth, the filter 32 must realize a series arrangement of the filter given in figure 4 and a noise shaping filter, such as the filter shown in figure 7. Figure 7 only shows two possible curves for the magnitude of the noise shaping filter as a function of frequency. The phase as a function of frequency can be considered to be zero.

Various possibilities of noise shaping filters are known in the literature. Noise shaping filters have for their object to shape the signal read out and equalized, such that the signal-to-noise ratio is high and the intersymbol interference in the signal is low. Figure 7 shows two examples of raised-cosine filters that can be used as noise-shaping filters. The magnitude curve I in figure 7 results in a relatively high signal-to-noise ratio, whereas the intersymbol interference is relatively high. This curve is e.g. the curve for a raised cosine filter of the type $\beta=2$. The magnitude curve II in figure 7 results in a relatively low signal-to-noise ratio, whereas the intersymbol interference is relatively low. This curve is e. g. the curve for a raised cosine filter of the type $\beta=3$. $f_n$ equals the Nyquist frequency, which equals half the bit frequency. The choice for the shaping filter is thus always a compromise between a high signal-to-noise ratio and a low sensitivity for intersymbol interference. Further, the choice of the shaping filter is determined by the possibility of obtaining a practical implementation of the equalization filter in a FIR filter having a limited number of taps. A discussion on shaping filters can amongst others be found in the book 'Magnetic recording, Vol II Computer data storage', editors C. Denis Mee and Eric D. Daniel, MacGraw-Hill Book Comp., 1988, chapter 4.6.3.2. on the pages 215 to 224.

As a result, the FIR filter 32 must realize a filter characteristic as given in figure 8. By carrying out an inverse fourier transform on the filter characteristic of figure 8, the impulse response of the filter 32 can be obtained. Figure 9 shows an example of such an impulse response. The multiplication factors can be obtained by sampling the impulse response of figure 9 with the sampling frequency of the signals in the arrangement. The coefficient values namely exactly equal the values of the samples in the impulse response. If the sampling frequency equals the bit frequency, this means that the samples in the impulse response ly a time interval T apart, T being the bit time. Figure 9 shows the situation where the FIR filter has an odd number of taps. All samples of the impulse response, except one, ly symmetrically around the centre at $t=t_c$ of the impulse response. The said one sample lies exactly on $t_c$. In the situation where the FIR filter has an even number of taps, all samples of the impulse response ly symmetrically around $t=t_c$.

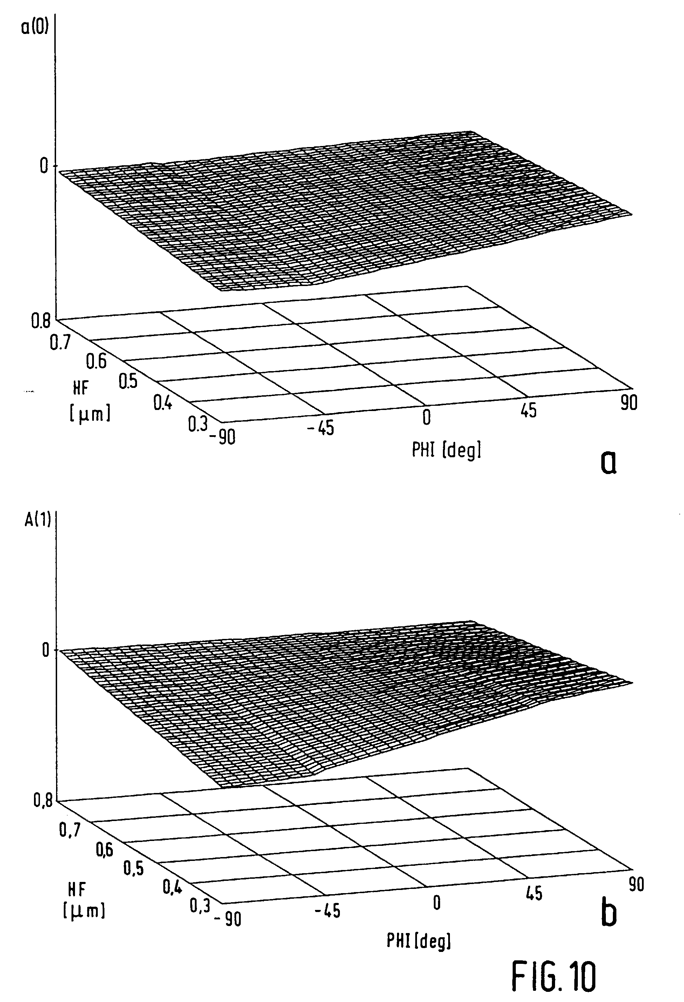

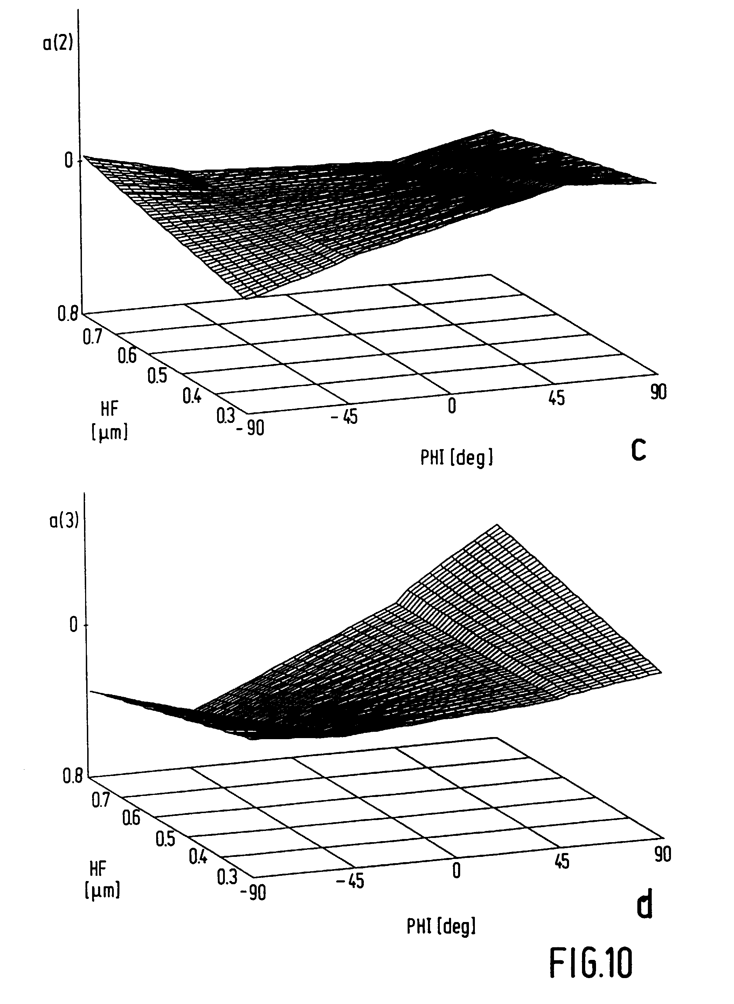

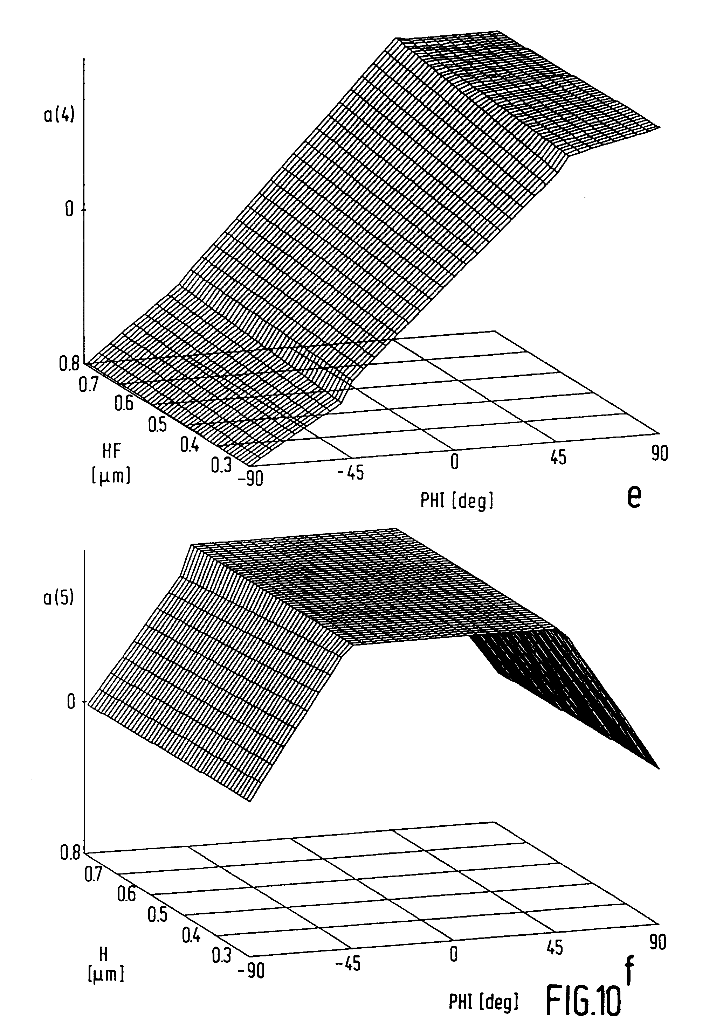

Figure 10 shows the multiplication factors a(0) to a(5) for the first six taps of a FIR filter having eleven taps as a function of HF and PHI. The remaining multiplication factors a(6) to a(10) can be obtained as follows.

Suppose that the parameter PHI is so related to $\phi_0$ that, when $\phi_0$ is zero, that also PHI is zero. In that situation the following equations hold for the multiplication factors a(6,HF,PHI) to a(10,HF,PHI): a(6,HF,PHI) = a(4,HF,-PHI), a(7,HF,PHI) = a(3,HF,-PHI), a(8,HF,PHI) = a(2,HF,-PHI), a(9,HF,PHI) = a(1,HF,-PHI) and a(10,HF,PHI) = a(0,HF,-PHI). Designating a coefficient a(n) by a(n,HF,PHI) means that each coefficient a(n) is a function of HF and PHI.

However, if the parameter PHI is so related to $\phi_0$ that PHI equals a non-zero value $PHI_c$ when $\phi_0$ is zero, then the following equations hold for the multiplication factors a(6,HF,PHI) to a(10,HF,PHI): a(6,HF,PHI) = a(4,HF,2*$PHI_c$-PHI), a(7,HF,PHI) = a(3,HF,2*$PHI_c$-PHI), a(8,HF,PHI) = a(2,HF,2*$PHI_c$-PHI), a(9,HF,PHI) = a(1,HF,2*$PHI_c$-PHI) and a(10,HF,PHI) = a(0,HF,2*$PHI_c$-PHI). So, generally said, the following equation holds:

$$a(n,HF,PHI) = a(N-1-n,HF,2*PHI_c-PHI)$$

where $PHI_c$ is the value for PHI when $\phi_0$ equals zero.

As can be seen in figure 10, the parameter PHI runs from -90° to +90°. PHI has in fact been calculated such that it corresponds to the phase $\phi_0$ of figure 4b).

Further, the parameter HF runs from 0.3 to 0.8. HF has in fact been calculated such that it corresponds to a in the following way:

$$\tan \alpha = 20.\pi.10^{-6}.HF/v.\ln(10),$$

where v is the relative velocity between the head and the record carrier.

It should be noted that the following relation exists for the curve given in figure 2a as a function of frequency:

$$H = \exp\{-\pi.p_{50}.f/v\},$$

where $p_{50}$ is the pulse width of a pulse at 50 % of the pulse amplitude. HF will now be defined as $p_{50}$ in µm, or HF = $10^6.p_{50}$.

Further,

$$\tan \alpha = 20 \log H/f,$$

as the transfer function H is expressed in dB in figure 2a.

More specific information about the parameter $p_{50}$ can be found in the book 'Magnetic recording, Vol. I (Technology)', editors C. Denis Mee and Eric D. Daniel, Mac-Graw-Hill Book Comp., 1987, chapter 2, more specifically chapter 2.1.2. and the pages 27, 37, 38 and 39.

Therefore, the above expressions for H and HF inserted in the formula for tan $\alpha$, this results in the above relationship between tan $\alpha$ and HF.

It should be noted that the multiplication factors are normalized by dividing the coefficients by the largest one. As can be seen in figure 10a and 10b, which show the coefficients a(6) and a(5) respectively, the coefficient a(6) is the largest, for PHI lying in a value range between approximately 45° and -45°. Further, a(5) is the largest in the value range for PHI lying between approximately 45° and 90°. In the value range for PHI between -45° and -90° the coefficient a(7) is the largest.

The dependence of the coefficients on the parameters HF and PHI can be approximated by the following formulae:

$$a(n) = A1(n) + A2(n)*HF + A3(n)*PHI + A4(n)*HF*PHI, \tag{EQ.1}$$

for PHI having a value lying in a first value range between approximately - 45° and 45°,

$$a(n) = B1(n) + B2(n)*HF + B3(n)*PHI + B4(n)*HF*PHI, \tag{EQ.2}$$

for PHI having a value lying in a second value range between approximately 45° and 90°, and

$$a(n) = C1(n) + C2(n)*HF + C3(n)*PHI + C4(n)*HF*PHI, \tag{EQ.3}$$

for PHI having a value lying in a third value range between -90° and approximately-45°.

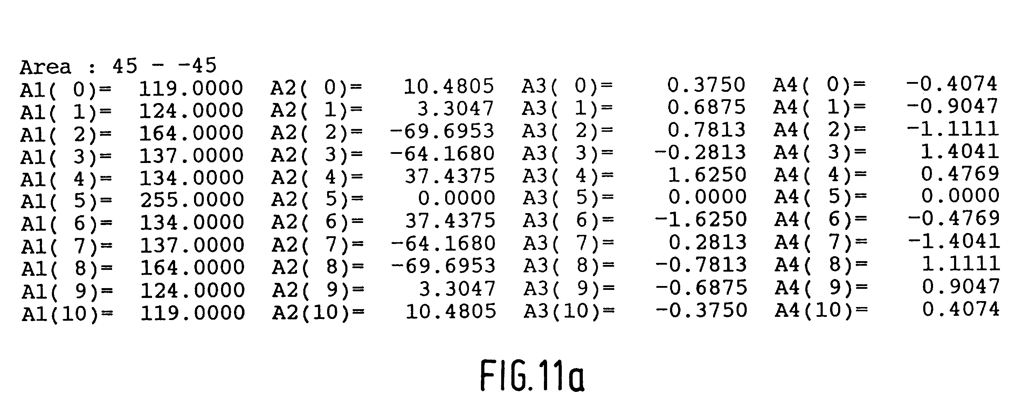

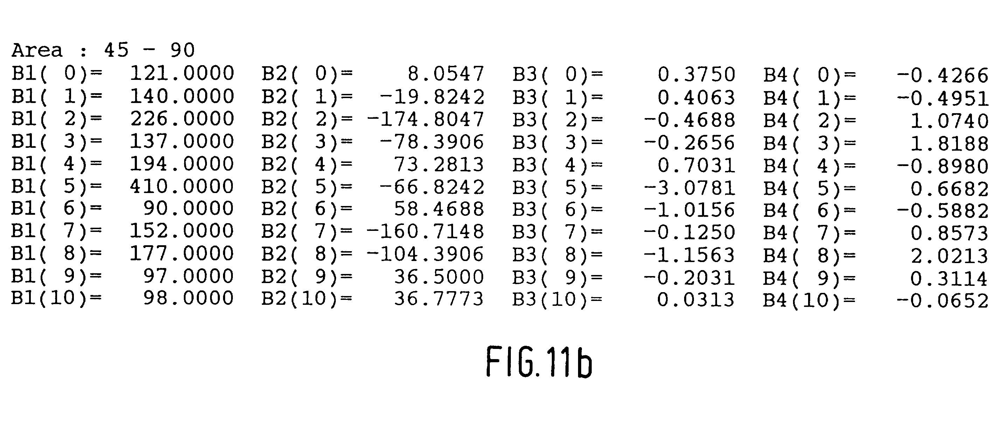

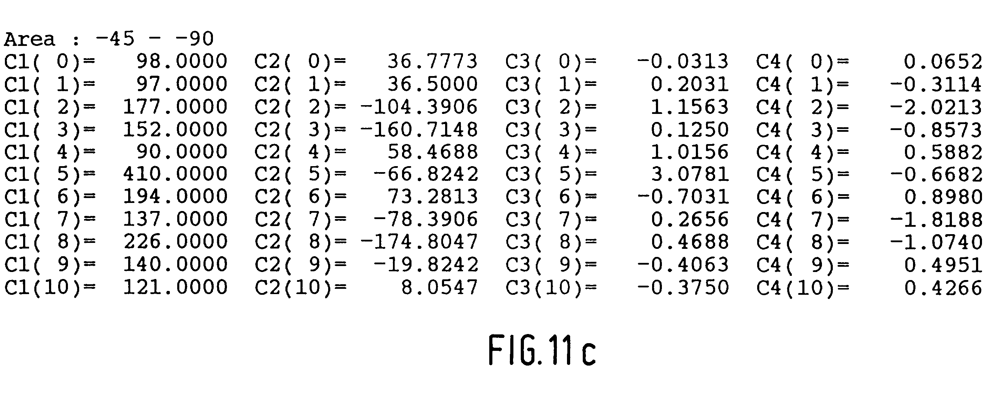

An example of the three sets of constants A1(n) to A4(n), B1(n) to B4(n) and C1(n) to C4(n) is given in the table of figure 11.

In response to the second control signal PHI having a value lying in one of the three value ranges, one of the three sets of constants stored in the memory 48 is selected and supplied to the calculation means 46 via the connection 50. The calculation means 46 calculates the multiplication factors a(0) to a(N-1) using the corresponding one of the formulae given above. The multiplication factors thus obtained are supplied to the multipliers 38.0 to 38.N-1, so that the required equalizer filter characteristic can be obtained.

It should be noted that in some applications, the parameter PHI only varies within the value range between -45° and 90°. In that situation there is no need to provide for a memory for storing the constants C1(n), C2(n), C3(n) and C4(n). In that situation, the multiplication factors are obtained using the equations (EQ.1) and (EQ.2) only.

In some situations, the parameter PHI will vary within the range of - 45° and +45° only. In that situation, only the formula (EQ.1) suffices to calculate the filter parameters.

As said previously, not all the constants in the figure 11 need to be stored. In the range for PHI lying between -45° and 45°, only the constants for n=0 to n=5 need to be stored, as the multiplication factors a(6) to a(10) can be derived from the constants A1(0) to A1(5), A2(0) to A2(5), A3(0) to A3(5) and A4(0) to A4(5). This is visible in figure 11 as the table of constants for this range is symmetrical along the horizontal coefficient line for n=5. If an equalization in the range for PHI lying between 45° and 90° is aimed at, all B-constants are needed to calculate the multiplication factors. But for an additional equalization in the range for PHI between -45° and -90°, no further constants, such as the C-constants are needed, as the multiplication factors a(n) for PHI lying in this range can be obtained using the B-constants. This is again visible in figure 11, as the tables with the B-constants and the C-constants are symmetrical to each other, that is: Bi(j) = Ci(N-1-j), where i runs from 1 to 4 and j runs from 0 to N-1.

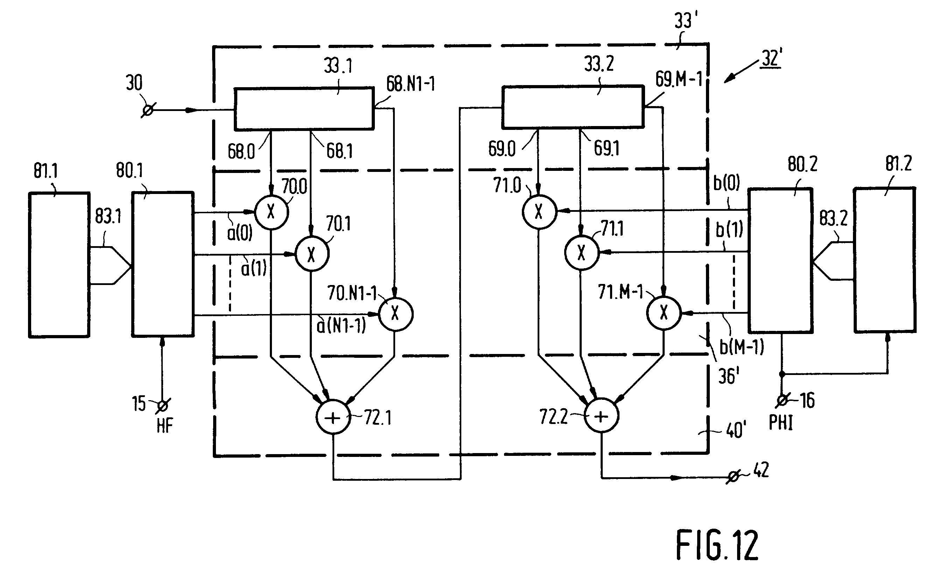

Figure 12 shows a second embodiment of the equalizer filter means 10. The FIR filter 32' comprises delay line means 33' having a first delay line section 33.1 having N1 taps 68.0 to 68.N1-1 and a second delay line section 33.2 having N-N1 taps 69.0 to 69.M-1, where M=N-N1. Multiplier means 36' are present comprising N1 multipliers 70.0 to 70.N1-1, having a first input coupled to a corresponding one of the N1 taps of the delay line section 33.1. The multiplier means 36' further comprising M multipliers 71.0 to 71.M-1, and having a first input coupled to a corresponding one of the N-N1 taps of the second delay line section 33.2. The FIR filter 32' further comprises signal combination means 40' having a first signal combination unit 72. in the form of an adder, and a second signal combination unit 72.2 in the form of an adder. The outputs of the multipliers 70.0 to 70.N1-1 are coupled to corresponding inputs of the signal combination unit 72.1, an output of which is coupled to an input of the second delay line section 33.2. The outputs of the multipliers 71.0 to 71.M-1 are coupled to corresponding inputs of the signal combination unit 72.2, an output of which is coupled to the output 42 of the equalizer means 10. The input 30 of the equalizer means 10 is coupled to an input of the first delay line section 33.1

The taps 68.0 to 68.N1-1 are located equidistantly in time along the delay line section 33.1. The taps 69.0 to 69.M-1 are in the same way located equidistantly in time along the delay line section 33.2. The time delays between two subsequent taps in both delay line sections need not necessarily be the same. Further, the time delays between the inputs of the delay line sections and the first tap in each section can be zero.

The multipliers 70.0 to 70.N1-1 receive via a second input multiplication factors a(0) to a(N1-1) respectively.

Multiplication factor generator means are present comprising first multiplication factor calculating means 80.1 and second multiplication factor calculating means 80.2. The multiplication factor calculating means 80.1 calculate the N1 multiplication factors a(0) to a(N1-1) for the first delay line section 33.1 in accordance with the following formula:

$$a(n) = A1(n) + A2(n)*HF, \tag{EQ.4}$$

where n runs from 0 to N1-1 inclusive.

The multiplication factor calculating means 80.2 calculate the M(=N-N1) multiplication factors b(0) to b(M-1) for the second delay line section 33.2 in accordance with the following formulae:

$$b(n) = A3(n) + A4(n)*PHI, \tag{EQ.5}$$

for PHI having a value lying in a first value range,

$$b(n) = B3(n) + B4(n)*PHI, \tag{EQ.6}$$

for PHI having a value lying in a second value range not overlapping the first value range, and

$$b(n) = C3(n) + C4(n)*PHI, \tag{EQ.7}$$

for PHI having a value lying in a third value range not overlapping the first and the second value range.

HF is again the value of the first control signal, PHI is again the value of the second control signal, A1(n), A2(n), A3(n), A4(n), B3(n), B4(n), C3(n) and C4(n) are constants for each multiplication factor b(n). A first memory unit 81.1 is available for storing at least a number of the constants A1(n) and A2(n). The constants A1(n) and A2(n) are supplied to the calculating means 80.1 via the coupling 83.1. A second memory unit 81.2 is available for storing at least a number of the constants A3(n), A4(n), B3(n), B4(n), C3(n) and C4(n).

The parameter HF is applied via the control input 15 to the calculating means 80.1, and the parameter PHI is applied to the calculating means 80.2 as well as to the memory 81.2 via the control signal input 16. The control signal input 16 is coupled to the memory 81.2 so as to indicate which one of the three sets of constants should be used for the calculation of the multiplication factors b(n). The set of constants selected is applied to the calculating means 80.2 via the coupling 83.2.

The derivation of the multiplication factors a(0) to a(N1-1) for the delay line section 33.1 and the multiplication factors b(0) to b(M-1) for the delay line section 33.2 can be done in the same way as described above for the embodiment of figure 6.

The derivation of the multiplication factors as described above for the embodiment of figure 6 is carried out a first time so as to obtain the N1 multiplication factors a(0) to a(N1-1) of the delay line section 33.1. As a boundary condition PHI is taken equal to zero, or equal to $PHI_c$, in the case that $PHI_c$ (which relates to $\phi_0 = 0$) is not equal to zero. The dependency of a(n) of HF as the only varying parameter can now be determined and lead to the formula EQ.4 with the parameters A1(n) and A2(n).

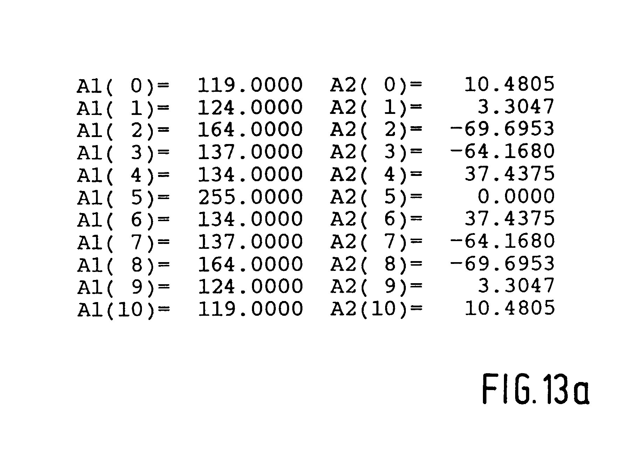

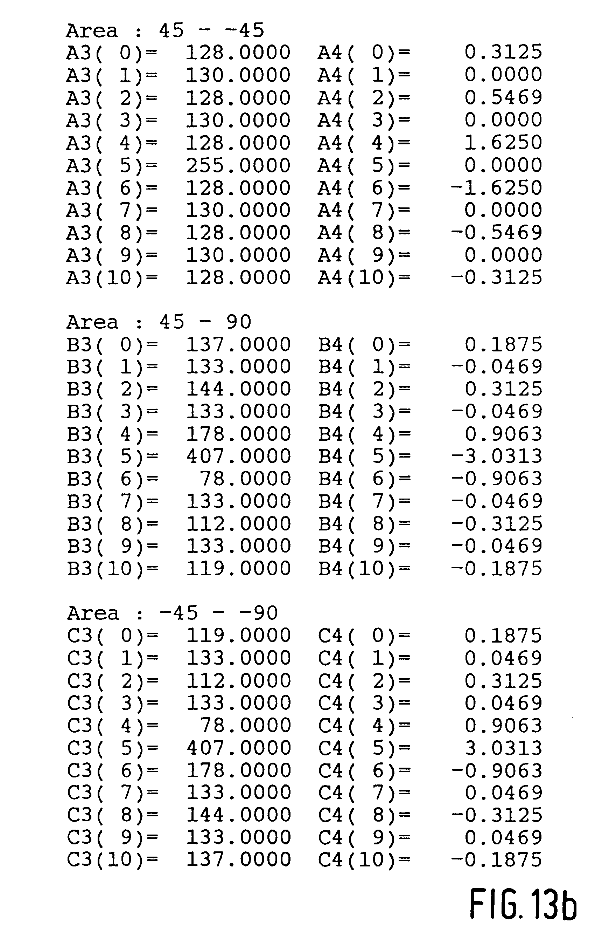

The derivation of the multiplication factors as described above for the embodiment of figure 6 is carried out a second time so as to obtain the M multiplication factors b(0) to b(M-1) for the second delay line section 33.2. The difference with the derivation described with reference to figure 6 is that the shaping filter should be left out in the derivation. If not, the embodiment of figure 12 would include twice the shaping filter which is not correct. Further, as a boundary condition, HF is taken equal to zero, assuming that HF equal to zero corresponds to $\alpha$ being equal to zero. If not, HF is taken equal to a certain value $HF_c$, where HF equal to $HF_c$ corresponds to $\alpha$ being equal to zero. The dependency of b(n) of PHI as the only varying parameter can now be determined and lead to the formulae EQ.5, EQ. 6 and EQ.7. The constants for the formulae EQ.4 to EQ.7 can be found in figure 13.

Comparison of the tables in figure 11 and 13 reveal that the constants A1(n) and A2(n) in the figure 11 equal the constants A1(n) and A2(n) in figure 13, which was to be expected. The constants A3(n), A4(n), B3(n), B4(n), C3(n) and C4(n) in figure 13 are not equal to any of the other constants in figure 11, for the reason that the shaping filter has been left out in the derivation of the multiplication factors for the filter section 33.2.

In the same way as mentioned above, it should be noted that in some applications, the parameter PHI only varies within the value range between - 45° and 90°. In that situation there is no need to provide for a memory for storing the constants C3(n) and C4(n). In that situation, the multiplication factors b(1) to b(M) are obtained using the equations (EQ.5) and (EQ.6) only. It is even possible that PHI varies between -45$^0$ and 45° only. In that situation (EQ.5) suffices for the calculation of the filter coefficients.

It should be noted that in order to realize an equalization with a certain quality using the embodiment of figure 6, a FIR filter 32 with a certain length, and thus a certain number N of taps, is required. Using the embodiment of figure 12, in order to realize an equalization with the same quality as with the embodiment of figure 6 might require a total number of taps N1 + M, which is larger than the number of taps N of the first embodiment.

## Claims

1. An arrangement for reproducing a digital signal from a track on a record carrier, the arrangement comprising

   - read means (5) including a read head, for reading a signal from the track,
   - variable equalizer means (10), having an input coupled to an output of the read means, first and second control signal inputs (15,16) for receiving a first and a second control signal respectively and an output, the variable equalizer means being adapted to equalize the signal applied to its input so as to obtain an equalized output signal at its output in response to the first and second control signal, the first control signal (HF) controlling the magnitude as a function of frequency of the variable equalizer means and the second control signal (PHI) controlling the delay as a function of frequency of the variable equalizer means, the variable equalizer means comprising digital filter means (32),
   - equalizer control signal generator means (11) having a first and a second output (12,13) for supplying the first and second control signal respectively, which first and second outputs are coupled to the first and second control signal input respectively of the equalizer means,
   - an output terminal (7) coupled to the output of the variable equalizer means for supplying the digital signal,

   the variable equalizer means comprising finite impulse response filter means (33,36,40), the FIR filter means comprising

   - delay line means (33) having a number of N taps,
   - multiplier means (36) for multiplying a signal present at the n-th tap of the delay line means by a multiplication factor a(n) and for supplying the multiplied signal to
   - signal combining means (40), an output (42) of the signal combining means being coupled to the output of the variable equalizer means,

   the variable equalizer means further comprising multiplication factor generator means (45) for generating the multiplication factors a(n) in response to the first and second control signal, characterized in that the multiplication factor generator means (45) comprises multiplication factor calculating means (46), the said multiplication factor calculating means being adapted to calculate at least a number of the N multiplication factors a(n) in accordance with the following formula:

$$a(n) = A1(n) + A2(n)*HF + A3(n)*PHI + A4(n)*HF*PHI,$$

   for PHI having a value lying in a first value range,
   where HF is the value of the first control signal, PHI is the value of the second control signal, A1(n), A2(n), A3(n) and A4(n) being constants for each multiplication factor a(n), memory means (48) being available for storing at least a number of said constants, and where n lies in a range from 0 to N-1 inclusive.

2. An arrangement as claimed in claim 1, characterized in that the said multiplication factor calculating means (46) are further adapted to calculate the remaining multiplication factors a(n) using the following formula:

$$a(n) = A1(N-1-n) + A2(N-1-n)*HF + A3(N-1-n)*\{2PHI_c-PHI) + A4(N-1-$$

$$n)*HF*\{2*PHI_c-PHI\},$$

where $PHI_c$ is the value for PHI corresponding to a difference in delay in the variable equalizer means which equals zero.

3. An arrangement as claimed in claim 1 or 2, characterized in that the multiplication factor calculating means (46) are further adapted to calculate the multiplication factors a(n) in accordance with the following formula:

$$a(n) = B1(n) + B2(n)*HF + B3(n)*PHI + B4(n)*HF*PHI,$$

for PHI having a value lying in a second value range not overlapping the first value range, where B1(n), B2(n), B3(n) and B4(n) are constants for each multiplication factor a(n), the memory means being further adapted to store at least a number of said constants B1(n) to B4(n).

4. An arrangement as claimed in claim 3, characterized in that the multiplication factor calculating means (46) are further adapted to calculate the multiplication factors a(n) in accordance with the following formula:

$$a(n) = C1(n) + C2(n)*HF + C3(n)*PHI + C4(n)*HF*PHI,$$

for PHI having a value lying in a third value range not overlapping the first and the second value range, where C1(n), C2(n), C3(n) and C4(n) are constants for each multiplication factor a(n), the memory means being further adapted to store at least a number of said constants Cl(n) to C4(n).

5. An arrangement for reproducing a digital signal from a track on a record carrier, the arrangement comprising

- read means (5) including a read head, for reading a signal from the track,
- variable equalizer means (10), having an input coupled to an output of the read means, first and second control signal inputs (15,16) for receiving a first and a second control signal respectively and an output, the variable equalizer means being adapted to equalize the signal applied to its input so as to obtain an equalized signal supplied at its output in response to the first and second control signal, the first control signal (HF) controlling the magnitude as a function of frequency of the variable equalizer means and the second control signal (PHI) controlling the delay as a function of frequency of the variable equalizer means, the variable equalizer means comprising digital filter means (32'),
- equalizer control signal generator means (11) having a first and a second output (12,13) for supplying the first and second control signal respectively, which first and second outputs are coupled to the first and second control signal input respectively of the equalizer means,
- an output terminal (7) coupled to the output of the variable equalizer means for supplying the digital signal,

the variable equalizer means comprising finite impulse response filter means (33'), the FIR filter means comprising

- delay line means (33.1,33.2) having a number of N taps,
- multiplier means (70,71) for multiplying a signal present at the n-th tap of the delay line means by a multiplication factor a(n) and for supplying the multiplied signal to
- signal combining means (72), an output (42) of the signal combining means being coupled to the output of the variable equalizer means,

the variable equalizer means further comprising multiplication factor generator means (80) for generating the multiplication factors a(n) in response to the first and second control signal, characterized in that the delay line means comprise a first delay line section (33.1) having a number of N1 taps and a second delay line section (33.2) having N-N1 taps, the signal combining means comprising a first and a second signal combination section (72.1,72.2), the multiplier means (70,71) being adapted to supply the output signals present at the N1 taps of the first delay line section after multiplication to the first signal combination section (72.1), and being adapted to supply the output signals present at the N-N1 taps of the second delay line section after multiplication to the second signal combination section (72.2), the signal combining means (72) being further adapted to supply the multiplied output signals of the first delay line section (33.1) after combining to the second delay line section (33.2) and to supply the multiplied output signals of the second delay line section (33.2) to the output of the variable equalizer means, the multiplication factor generator means comprising multiplication factor calculating means (80.1), the said multiplication factor calculating means being adapted to calculate at least a number of the N1 multiplication factors a(n) for the N1 output signals of the first delay line section in accordance with the following formula:

$$a(n) = 1(n) + A2(n)*HF,$$

where n lies in a range from 0 to N1-1 inclusive, the multiplication factor calculating means (80.1) being adapted to calculate at least a number of the N-N1 multiplication factors a(n) for the N-N1 output signals of the second delay line section in accordance with the following formula:

$$a(n) = A3(n) + A4(n)*PHI,$$

for PHI having a value lying in a first value range, where n runs from 0 to N-N1-1 inclusive,
where HF is the value of the first control signal, PHI is the value of the second control signal, A1(n), A2(n), A3(n), A4(n), being constants for each multiplication factor a(n), memory means (81.1) being available for storing at least a number of said constants.

6. Arrangement as claimed in claim 5, characterized in that the said multiplication factor calculating means (80.1) are further adapted to calculate the remaining multiplication factors of the N1 multiplication factors for the first delay line section using the following formula:

$$a(n) = A1(N1-1-n) + A2(N1-1-n)*HF$$

and to calculate the remaining multiplication factors of the N-N1 multiplication factors for the second delay line section using the following formula:

$$a(n) = A3(N-N1-1-n) + A4(N-N1-1-n)*\{2PHI_c-PHI\},$$

where $PHI_c$ is the value for PHI corresponding to the difference in delay in the variable equalizer means which equals zero.

7. An arrangement as claimed in claim 5 or 6, characterized in that the multiplication factor calculating means (80.1) are further adapted to calculate the multiplication factors a(n) for the N-N1 output signals of the second delay line section in accordance with the following formula:

$$a(n) = B3(n) + B4(n)*PHI,$$

for PHI having a value lying in a second value range not overlapping the first value range, B3(n) and B4(n) being constants for each multiplication factor a(n), the memory means (81.1) being further adapted to store at least a number of said constants B3(n), B4(n).

8. An arrangement as claimed in claim 7, characterized in that the multiplication factor calculating means (80.1) are further adapted to calculate the multiplication factors a(n) for the N-N1 output signals of the second delay line section in accordance with the following formula:

$$a(n) = C3(n) + C4(n)*PHI,$$

for PHI having a value lying in a third value range not overlapping the first and the second value range, where C3(n) and C4(n) are constants for each multiplication factor a(n), the memory means being further adapted to store at least a number of said constants C3(n), C4(n).

**Patentansprüche**

1. Eine Einrichtung zum Wiedergeben eines digitalen Signals von einer Spur auf einem Aufzeichnungsträger, diese Einrichtung umfaßt

   - ein Lesegerät (5) mit einem Lesekopf zum Lesen eines Signals von der Spur,
   - eine variable Entzerreinrichtung (10) mit einem Eingang, der mit einem Ausgang des Lesegeräts verbunden ist, einem ersten und einem zweiten Steuersignaleingang (15, 16) zum Empfangen eines ersten bzw. eines zweiten Steuersignals und einem Ausgang, wobei die variable Entzerreinrichtung so eingerichtet wird, daß sie das an ihren Eingang angelegte Signal entzerrt, um am Ausgang ein entzerrtes Ausgangssignal als Reaktion auf das erste und das zweite Steuersignal zu erhalten, wobei das erste Steuersignal (HF) die Größe als Funktion der Frequenz der variablen Entzerreinrichtung steuert und das zweite Steuersignal (PHI) die Verzögerung als Funktion der Frequenz der variablen Entzerreinrichtung steuert, und die variable Entzerreinrichtung eine digitale Filtereinrichtung (32) umfaßt,
   - einen Entzerrersteuersignalgenerator (11) mit einem ersten und einem zweiten Ausgang (12, 13) zum Liefern eines ersten bzw. eines zweiten Steuersignals, wobei der erste und der zweite Ausgang mit dem ersten bzw. zweiten Signaleingang der Entzerreinrichtung verbunden ist,
   - eine an den Ausgang der variablen Entzerreinrichtung angeschlossene Ausgangsklemme (7) zum Liefern des digitalen Signals,

   wobei die variable Entzerreinrichtung einen Frequenzgangabschnittfilter (33, 36, 40) umfaßt und der Frequenzgangabschnittfilter

   - eine Verzögerungsleitung (33) mit N Abgriffen umfaßt, sowie
   - eine Multipliziereinrichtung (36) zum Multiplizieren eines am n. Abgriff der Verzögerungsleitung vorhandenen Signals mit einem Multiplizierfaktor a(n) und zum Liefern des multiplizierten Signals an eine
   - Signalverknüpfungseinrichtung (40), wobei ein Ausgang (42) der Signalverknüpfungseinrichtung an den Ausgang der variablen Entzerreinrichtung angeschlossen ist,

   und die variable Entzerreinrichtung zudem eine Einrichtung zum Erzeugen von Multiplizierfaktoren (45) zum Erzeugen der Multiplizierfaktoren a(n) als Reaktion auf das erste und das zweite Steuersignal umfaßt und dadurch gekennzeichnet ist, daß die Einrichtung zum Erzeugen von Multiplizierfaktoren (45) eine Einrichtung zum Berechnen von Multiplizierfaktoren (46) umfaßt, wobei die besagte Einrichtung zum Berechnen von Multiplizierfaktoren so eingerichtet wird, daß sie mindestens einige der N Multiplizierfaktoren a(n) mit folgender Formel berechnet:

$$a(n) = A1(n) + A2(n)*HF + A3(n)*PHI + A4(n)*HF*PHI,$$

   wobei PHI in einem ersten Wertebereich liegt,
   wobei HF der Wert des ersten Steuersignals ist, PHI der Wert des zweiten Steuersignals ist, A1(n), A2(n), A3(n) und A4(n) Konstanten für die jeweiligen Multiplizierfaktoren a(n) sind und eine Speichereinrichtung (48) zum Speichern mindestens einiger der besagten Konstanten vorhanden ist und n im Bereich zwischen einschließlich 0 und N-1 liegt.

2. Eine Einrichtung nach Anspruch 1, dadurch gekennzeichnet, daß die besagte Einrichtung zum Berechnen von Multiplizierfaktoren (46) so eingerichtet ist, daß sie die übrigen Multiplizierfaktoren a(n) mit der folgenden Formel berechnet:

$$a(n) = A1(N-1-n) + A2(N-1-n)*HF + A3(N-1-n)*\{2*PHI_c - PHI\} + A4(N-1-$$

$$n)*HF*\{2*PH_c - PHI\},$$

   wobei $PHI_c$ der Wert von PHI ist, der einem Verzögerungsunterschied gleich Null in der variablen Entzerreinrichtung entspricht.

3. Eine Einrichtung nach Anspruch 1 oder 2, dadurch gekennzeichnet, daß die Einrichtung zum Berechnen von Multiplizierfaktoren (46) so eingerichtet wird, daß sie die Multiplizierfaktoren a(n) mit der folgenden Formel berechnet:

$$a(n) = B1(n) + B2(n)*HF + B3(n)*PHI + B4(n)*HF*PHI,$$

wobei PHI in einem zweiten Wertebereich liegt, der sich mit dem ersten Wertebereich nicht überschneidet, B1(n), B2(n), B3(n) und B4(n) Konstanten für die jeweiligen Multiplikationsfaktoren a(n) sind und die Speichereinrichtung so eingerichtet wird, daß sie mindestens einige der besagten Konstanten B1(n) bis B4(n) speichert.

4. Eine Einrichtung nach Anspruch 3, dadurch gekennzeichnet, daß die Einrichtung zum Berechnen von Multiplizierfaktoren (46) so eingerichtet wird, daß sie die Multiplizierfaktoren a(n) mit der folgenden Formel berechnet:

$$a(n) = C1(n) + C2(n)*HF + C3(n)*PHI + C4(n)*HF*PHI,$$

wobei PHI in einem dritten Wertebereich liegt, der sich mit dem ersten und dem zweiten Wertebereich nicht überschneidet, C1(n), C2(n), C3(n) und C4(n) Konstanten für die jeweiligen Multiplikationsfaktoren a(n) sind und die Speichereinrichtung so eingerichtet wird, daß sie mindestens einige der besagten Konstanten C1(n) bis C4(n) speichert.

5. Eine Einrichtung zum Wiedergeben eines digitalen Signals von einer Spur auf einem Aufzeichnungsträger, diese Einrichtung umfaßt

- ein Lesegerät (5) mit einem Lesekopf zum Lesen eines Signals der Spur,
- eine variable Entzerreinrichtung (10) mit einem Eingang, der mit einem Ausgang des Lesegeräts verbunden ist, einem ersten und einem zweiten Steuersignaleingang (15, 16) zum Empfangen eines ersten bzw. eines zweiten Steuersignals und einem Ausgang, wobei die variable Entzerreinrichtung so eingerichtet wird, daß sie das an ihren Eingang angelegte Signal entzerrt, um am Ausgang ein entzerrtes Ausgangssignal als Reaktion auf das erste und das zweite Steuersignal zu erhalten, wobei das erste Steuersignal (HF) die Größe als Funktion der Frequenz der variablen Entzerreinrichtung steuert und das zweite Steuersignal (PHI) die Verzögerung als Funktion der Frequenz der variablen Entzerreinrichtung steuert, und die variable Entzerreinrichtung eine digitale Filtereinrichtung (32') umfaßt,
- einen Entzerrersteuersignalgenerator (11) mit einem ersten und einem zweiten Ausgang (12, 13) zum Liefern eines ersten bzw. eines zweiten Steuersignals, wobei der erste und der zweite Ausgang mit dem ersten bzw. zweiten Signaleingang der Entzerreinrichtung verbunden ist,
- eine an den Ausgang der variablen Entzerreinrichtung angeschlossene Ausgangsklemme (7) zum Liefern des digitalen Signals,

wobei die variable Entzerreinrichtung einen Frequenzgangabschnittfilter (33') umfaßt und der Frequenzgangabschnittfilter

- eine Verzögerungsleitung (33.1, 33.2) mit N Abgriffen umfaßt, sowie
- eine Multipliziereinrichtung (70, 71) zum Multiplizieren eines am n.

Abgriff der Verzögerungsleitung vorhandenen Signals mit einem Multiplizierfaktor a(n) und zum Liefern des multiplizierten Signals an eine Signalverknüpfungseinrichtung (72), wobei ein Ausgang (42) der Signalverknüpfungseinrichtung an den Ausgang der variablen Entzerreinrichtung angeschlossen ist,
und die variable Entzerreinrichtung zudem eine Einrichtung zum Erzeugen von Multiplizierfaktoren (80) zum Erzeugen der Multiplizierfaktoren a(n) als Reaktion auf das erste und das zweite Steuersignal umfaßt, die dadurch gekennzeichnet ist, daß die Verzögerungsleitung einen ersten Verzögerungsleitungsabschnitt (33.1) mit N1 Abgriffen und einen zweiten Verzögerungsleitungsabschnitt (33.2) mit N-N1 Abgriffen umfaßt, die Signalverknüpfungseinrichtung einen ersten und einen zweiten Signalverknüpfungsabschnitt (72.1, 72.2) umfaßt und die Multipliziereinrichtung (70, 71) so eingerichtet wird, daß sie die Ausgangssignale, die sich bei den N1 Abgriffen des ersten Verzögerungsleitungsabschnitts befinden, nach dem Multiplizieren an den ersten Signalverknüpfungsabschnitt (72.1) liefert und auch so eingerichtet wird, daß sie die Ausgangssignale, die sich bei den N-N1 Abgriffen des zweiten Verzögerungsleitungsabschnitts befinden, nach dem Multiplizieren an den zweiten Signalverknüpfungsabschnitt (72.2) liefert, und die Signalverknüpfungseinrichtung (72) so eingerichtet wird, daß sie die multiplizierten Ausgangssignale des ersten Verzögerungsleitungsabschnitts (33.1) nach dem Verknüpfen an den zweiten Verzögerungsleitungsabschnitt (33.2) liefert und die multiplizierten Ausgangssignale des zweiten Verzögerungsleitungsabschnitts (33.2) an den Ausgang der variablen Entzerreinrichtung liefert, und die Einrichtung zum Erzeugen von Multiplizierfaktoren eine Einrichtung zum Berechnen von Multiplizierfaktoren (80.1) umfaßt und die besagte Einrichtung zum Berechnen von Multiplizierfaktoren so eingerichtet wird, daß sie mindestens einige der Multiplizierfaktoren a(n) für die N1 Ausgangssignale des ersten Verzögerungsleitungsabschnitts mit der folgenden Formel berechnet:

$$a(n) = A1(n) + A2(n)*HF,$$

wobei n im Bereich von einschließlich 0 bis N1-1 liegt, und die Einrichtung zum Berechnen von Multiplizierfaktoren (80.1) so eingerichtet wird, daß sie mindestens einige der N-N1 Multiplizierfaktoren a(n) für die N-N1 Ausgangssignale des zweiten Verzögerungsleitungsabschnitts mit der folgenden Formel berechnet:

$$a(n) = A3(n) + A4(n)*PHI,$$

wobei PHI in einem ersten Wertebereich liegt, n von einschließlich 0 bis N-N1-1 verläuft,
HF der Wert des ersten Steuersignals, PHI der Wert des zweiten Steuersignals ist und A1(n), A2(n), A3(n) und A4(n)) Konstanten für den jeweiligen Multiplizierfaktor a(n) sind und der Speicher (81.1) zum Speichern mindestens einiger der besagten Konstanten verfügbar ist.

6. Eine Einrichtung nach Anspruch 5, dadurch gekennzeichnet, daß die besagte Einrichtung zum Berechnen von Multiplizierfaktoren (80.1) so eingerichtet ist, daß sie die von den N1 Multiplitzierfaktoren verbleibenden Multiplizierfaktoren für den ersten Abschnitt der Verzögerungsleitung mit der folgenden Formel berechnet:

$$a(n) = A1(N1-1-n) + A2(N1-1-n)*HF$$

und die von den N-N1 Multiplizierfaktoren verbleibenden Multiplizierfaktoren für den zweiten Abschnitt der Verzögerungsleitung mit der folgenden Formel berechnet:

$$a(n) = A3(N-N1-1-n) + A4(N-N1-1-n)*\{2PHI_c-PHI\},$$

wobei $PHI_c$ der Wert von PHI ist, der einer Verzögerungsdifferenz der variablen Entzerreinrichtung gleich Null entspricht.

7. Eine Einrichtung nach Anspruch 5 oder 6, dadurch gekennzeichnet, daß die Einrichtung zum Berechnen von Multiplizierfaktoren (80.1) so eingerichtet ist, daß sie die Multiplizierfaktoren a(n) für die N-N1 Ausgangssignale des zweiten Abschnitts der Verzögerungsleitung nach der folgenden Formel berechnet:

$$a(n) = B3(n) + B4(n)*PHI,$$

wobei PHI einen Wert hat, der in einem zweiten Wertebereich liegt, der sich mit dem ersten Wertebereich nicht überschneidet, B3(n) und B4(n) Konstanten für die jeweiligen Multiplizierfaktoren a(n) sind und die Speichereinrichtung (81.1) so eingerichtet ist, daß sie mindestens einige der besagten Konstanten B3(n) und B4(n) speichert.

8. Eine Einrichtung nach Anspruch 7, dadurch gekennzeichnet, daß die Einrichtung zum Berechnen von Multiplizierfaktoren (80.1) so eingerichtet ist, daß sie die Multiplizierfaktoren a(n) für die N-N1 Ausgangssignale des zweiten Abschnitts der Verzögerungsleitung nach der folgenden Formel berechnet:

$$a(n) = C3(n) + C4(n)*PHI,$$

wobei PHI einen Wert hat, der in einem dritten Wertebereich liegt, der sich mit dem ersten und dem zweiten Wertebereich nicht überschneidet, C3(n) und C4(n) Konstanten für die jeweiligen Multiplizierfaktoren a(n) sind und die Speichereinrichtung so eingerichtet ist, daß sie mindestens einige der besagten Konstanten C3(n) und C4(n) speichert.

**Revendications**

1. Dispositif pour la reproduction d'un signal numérique à partir d'une piste sur un support d'enregistrement, le dispositif comprenant :

   - un moyen de lecture (5) comprenant une tête de lecture pour lire un signal sur la piste,
   - un moyen correcteur variable (10) ayant une entrée couplée à une sortie du moyen de lecture, une première et une deuxième entrées (15, 16) de signaux de commande pour recevoir un premier et un second signaux de commande respectivement, et une sortie, le moyen correcteur variable étant à même de corriger le signal appliqué à son entrée pour obtenir un signal de sortie corrigé à sa sortie en réponse au premier et au second signaux de commande, le premier signal de commande (HF) commandant l'amplitude en fonction de la fréquence du moyen correcteur variable et le second signal de commande (PHI) commandant le retard en fonction de la fréquence du moyen correcteur variable, le moyen correcteur variable comprenant des moyens de filtrage numériques (32),
   - un moyen (11) générateur de signaux de commande de correcteur ayant une première et une seconde sorties (12, 13) pour délivrer le premier et le second signaux de commande, respectivement, lesdites première et seconde sorties étant couplées aux première et seconde entrées de signaux de commande, respectivement, du moyen correcteur,
   - une borne de sortie (7) couplée à la sortie du moyen correcteur variable pour délivrer le signal numérique,

   le moyen correcteur variable comprenant des moyens de filtrage à réponse impulsionnelle finie (33, 36, 40), les moyens de filtrage FIR comprenant :

   - un moyen à ligne de retard (33) ayant un nombre de N prises,
   - des moyens de multiplication (36) pour multiplier un signal présent à la nième prise du moyen à ligne de retard par un facteur de multiplication a(n) et pour délivrer le signal multiplié à
   - des moyens de combinaison de signaux (40), dont une sortie (42) est couplée à la sortie du moyen correcteur variable,
   le moyen correcteur variable comprenant en outre un moyen générateur de facteurs de multiplication (45) pour générer les facteurs de multiplication a(n) en réponse aux premier et au second signaux de commande, caractérisé en ce que le moyen générateur de facteurs de multiplication (45) comprend des moyens de calcul de facteurs de multiplication (46), lesdits moyens de calcul de facteurs de multiplication étant à même de calculer au moins un certain nombre des N facteurs de multiplication a(n) conformément à la formule suivante :

   $$a(n) = A1(n) + A2(n)*HF + A3(n)*PHI + A4(n)*HF*PHI$$

   pour PHI ayant une valeur se situant dans une première plage de valeurs, où HF est la valeur du premier signal de commande, PHI est la valeur du second signal de commande, A1(n), A2(n), A3(n), A4(n) sont des constantes pour chaque facteur de multiplication a(n), des moyens de mémorisation (48) étant présents pour stocker au moins un certain nombre desdites constantes, et n se situant dans une plage de 0 à N-1 inclus.

2. Dispositif selon la revendication 1, caractérisé en ce que lesdits moyens de calcul de facteurs de multiplication (46) sont en outre à même de calculer les facteurs de multiplication restants a(n) en utilisant la formule suivante :

   $$a(n) = A1(N\text{-}1\text{-}n) + A2(N\text{-}1\text{-}n)*HF + A3(N\text{-}1\text{-}n)*\{2PHI_c\text{-}PHI\} + A4(N\text{-}1\text{-}$$

   $$n)*HF*\{2*PH_c\text{-}PHI\},$$

   où $PHI_c$ est la valeur de PHI correspondant à une différence de retard égale à zéro dans le moyen correcteur variable.

3. Dispositif selon la revendication 1 ou 2, caractérisé en ce que les moyens de calcul des facteurs de multiplication (46) sont en outre à même de calculer les facteurs de multiplication a(n) conformément à la formule suivante :

   $$a(n) = B1(n) + B2(n)*HF + B3(n)*PHI + B4(n)*HF*PHI$$

pour PHI ayant une valeur se situant dans une deuxième plage de valeurs ne chevauchant pas la première plage de valeurs, où B1(n), B2(n), B3(n) et B4(n) sont des constantes pour chaque facteur de multiplication a(n), les moyens de mémorisation étant en outre à même de stocker au moins un certain nombre desdites constantes B1 (n) à B4(n).

4. Dispositif selon la revendication 3, caractérisé en ce que les moyens de calcul de facteurs de multiplication (46) sont en outre à même de calculer les facteurs de multiplication a(n) selon la formule suivante :

$$a(n) = C1(n) + C2(n)*HF + C3(n)*PHI + C4(n)*HF*PHI$$

pour PHI ayant une valeur se situant dans une troisième plage de valeurs ne chevauchant pas la première et la deuxième plages de valeurs, où C1(n), C2(n), C3(n) et C4(n) sont des constantes pour chaque facteur de multiplication a(n), les moyens de mémorisation étant en outre à même de stocker au moins un certain nombre desdites constantes C1(n) à C4(n).

5. Dispositif de reproduction d'un signal numérique à partir d'une piste sur un support d'enregistrement, le dispositif comprenant :

- un moyen de lecture (5) comprenant une tête de lecture pour lire un signal sur la piste,
- un moyen correcteur variable (10) ayant une entrée couplée à une sortie du moyen de lecture, une première et une deuxième entrées (15, 16) de signaux de commande pour recevoir un premier et un second signaux de commande respectivement, et une sortie, le moyen correcteur variable étant à même de corriger le signal appliqué à son entrée pour obtenir un signal de sortie corrigé à son sortie en réponse au premier et au second signaux de commande, le premier signal de commande (HF) commandant l'amplitude en fonction de la fréquence du moyen correcteur variable et le second signal de commande (PHI) commandant le retard en fonction de la fréquence du moyen correcteur variable, le moyen correcteur variable comprenant des moyens de filtrage numériques (32'),
- sur moyen (11) générateur de signaux de commande de correcteur ayant une première et une seconde sorties (12, 13) pour délivrer le premier et le second signaux de commande, respectivement, lesdites première et seconde sorties étant couplées aux première et seconde entrées de signaux de commande, respectivement, du moyen correcteur,
- une borne de sortie (7) couplée à la sortie du moyen correcteur variable pour délivrer le signal numérique,

le moyen correcteur variable comprenant des moyens de filtrage à réponse impulsionnelle finie (33'), les moyens de filtrage FIR comprenant :

- un moyen à ligne à retard (33.1, 33.2) ayant un nombre de N prises,
- des moyens de multiplication (70, 71) pour multiplier un signal présent à la nième prise du moyen à ligne à retard par un facteur de multiplication a(n) et pour délivrer le signal multiplié à :
- des moyens de combinaison de signaux (72), dont une sortie (42) est couplée à la sortie du moyen correcteur variable,

le moyen correcteur variable comprenant en outre un moyen générateur de facteurs de multiplication (80) pour générer les facteurs de multiplication a(n) en réponse au premier et au second signaux de commande, caractérisé en ce que le moyen à ligne à retard comprend une première section de ligne à retard (33.1) ayant un nombre de N1 prises et une seconde section de ligne à retard (33.2) ayant N - N1 prises, les moyens de combinaison de signaux comprenant une première et une seconde sections de combinaison de signaux (72.1, 72.2), les moyens de multiplication (70, 71) étant à même de délivrer les signaux de sortie présents aux N1 prises de la première section de ligne à retard après multiplication à la première section de combinaison de signaux (72.1) et étant à même de délivrer les signaux de sortie présents aux N-N1 prises de la seconde section de ligne à retard après multiplication à la seconde section de combinaison de signaux (72.2), les moyens de combinaison de signaux (72) étant en outre à même de délivrer les signaux de sortie multipliés de la première section de ligne à retard (33.1) après combinaison à la seconde section de ligne à retard (33.2) et de délivrer les signaux de sortie multipliés de la seconde section de ligne à retard (33.2) à la sortie des moyen correcteur variable, les moyens générateurs de facteurs de multiplication comprenant des moyens de calcul de facteurs de multiplication (80.1), lesdits moyens de calcul de facteurs de multiplication étant à même de calculer au moins un certain nombre des N1 facteurs de multiplication a(n) pour les N1 signaux de sortie de la première section de ligne à retard conformément à la formule

suivante :

$$a(n) = A1(n) + A2(n)*HF,$$

où n se situe dans une plage de 0 à N1-1 inclus, les moyens de calcul de facteurs de multiplication (80.1) étant aptes à calculer au moins un certain nombre de N-N1 facteurs de multiplication a(n) pour les N-N1 signaux de sortie de la seconde section de ligne à retard selon la formule suivante :

$$a(n) = A3(n) + A4(n)*PHI,$$

pour PHI se situant dans une première plage de valeurs, où N varie de zéro à N-N1-1 inclus,
où HF est la valeur du premier signal de commande, PHI est la valeur du second signal de commande, A1(n), A2(n), A3(n), A4(n) étant des constantes pour chaque facteur de multiplication a(n), des moyens de mémorisation (81.1) étant présents pour stocker au moins un certain nombre desdites constantes.

6. Dispositif selon la revendication 5, caractérisé en ce que lesdits moyens de calcul de facteurs de multiplication (80.1) sont en outre à même de calculer les facteurs de multiplication restants des N1 facteurs de multiplication pour la première section de ligne à retard en utilisant la formule suivante :

$$a(n) = A1(N1-1-n) + A2(N1-1-n)*HF$$

et de calculer les facteurs de multiplication restants des N-N1 facteurs de multiplication pour la seconde section de ligne à retard en utilisant la formule suivante :

$$a(n) = A3(N-N1-1-n) + A4(N-N1-1-n)*\{2PHI_c-PHI\},$$

où $PHI_c$ est la valeur de PHI correspondant à une différence de retard égale à zéro dans le moyen correcteur variable.

7. Dispositif selon la revendication 5 ou 6, caractérisé en ce que les moyens de calcul de facteurs de multiplication (80.1) sont en outre à même de calculer les facteurs de multiplication a(n) pour les N-N1 signaux de sortie de la seconde section de ligne à retard conformément à la formule suivante :

$$a(n) = B3(n) + B4(n)*PHI$$

pour PHI ayant une valeur située dans une deuxième plage de valeurs ne chevauchant pas la première plage de valeurs, B3(n) et B4(n) étant des constantes pour chaque facteur de multiplication a(n), les moyens de mémorisation (81.1) étant en outre à même de stocker au moins un certain nombre desdits constantes B3(n), B4(n).

8. Dispositif selon la revendication 7, caractérisé en ce que les moyens de calcul des facteurs de multiplication (80.1) sont en outre à même de calculer les facteurs de multiplication a(n) pour les N-N1 signaux de sortie de la seconde section de ligne à retard conformément à la formule suivante :

$$a(n) = C3(n) + C4(n)*PHI$$

pour PHI ayant une valeur située dans une troisième plage de valeurs ne chevauchant pas la première et la deuxième plages de valeurs, où C3(n) et C4(n) sont des constantes pour chaque facteur de multiplication a(n), les moyens de mémorisation étant en outre à même de stocker au moins un certain nombre desdites constantes C3(n) et C4(n).

FIG.1

a

b

FIG. 2

a

b

FIG.3

EP 0 585 991 B1

|M|
(dB)

α

f

a

φ

φ₀

f

b

FIG.4

S₁  S₂
S₃  S₄

T

S₁'  S₂'
S₃'  S₄'

0 0 0 1

0 1 1 1     a

1 1 1 0

1 0 0 0     b

FIG.5

|M|
(lin)

I

II

I     II

fₙ     f

FIG.7

19

FIG.6

|M|

(dB)

a

φ

0

b

FIG.8

$t_c$

t

FIG.9

FIG. 10

c

d

FIG.10

FIG.10

```
Area : 45 - -45
A1( 0)=  119.0000   A2( 0)=    10.4805   A3( 0)=    0.3750   A4( 0)=   -0.4074
A1( 1)=  124.0000   A2( 1)=     3.3047   A3( 1)=    0.6875   A4( 1)=   -0.9047
A1( 2)=  164.0000   A2( 2)=   -69.6953   A3( 2)=    0.7813   A4( 2)=   -1.1111
A1( 3)=  137.0000   A2( 3)=   -64.1680   A3( 3)=   -0.2813   A4( 3)=    1.4041
A1( 4)=  134.0000   A2( 4)=    37.4375   A3( 4)=    1.6250   A4( 4)=    0.4769
A1( 5)=  255.0000   A2( 5)=     0.0000   A3( 5)=    0.0000   A4( 5)=    0.0000
A1( 6)=  134.0000   A2( 6)=    37.4375   A3( 6)=   -1.6250   A4( 6)=   -0.4769
A1( 7)=  137.0000   A2( 7)=   -64.1680   A3( 7)=    0.2813   A4( 7)=   -1.4041
A1( 8)=  164.0000   A2( 8)=   -69.6953   A3( 8)=   -0.7813   A4( 8)=    1.1111
A1( 9)=  124.0000   A2( 9)=     3.3047   A3( 9)=   -0.6875   A4( 9)=    0.9047
A1(10)=  119.0000   A2(10)=    10.4805   A3(10)=   -0.3750   A4(10)=    0.4074
```

## FIG.11a

EP 0 585 991 B1

```
Area : 45 - 90
B1( 0)=  121.0000  B2( 0)=      8.0547  B3( 0)=      0.3750  B4( 0)=   -0.4266
B1( 1)=  140.0000  B2( 1)=    -19.8242  B3( 1)=      0.4063  B4( 1)=   -0.4951
B1( 2)=  226.0000  B2( 2)=   -174.8047  B3( 2)=     -0.4688  B4( 2)=    1.0740
B1( 3)=  137.0000  B2( 3)=    -78.3906  B3( 3)=     -0.2656  B4( 3)=    1.8188
B1( 4)=  194.0000  B2( 4)=     73.2813  B3( 4)=      0.7031  B4( 4)=   -0.8980
B1( 5)=  410.0000  B2( 5)=    -66.8242  B3( 5)=     -3.0781  B4( 5)=    0.6682
B1( 6)=   90.0000  B2( 6)=     58.4688  B3( 6)=     -1.0156  B4( 6)=   -0.5882
B1( 7)=  152.0000  B2( 7)=   -160.7148  B3( 7)=     -0.1250  B4( 7)=    0.8573
B1( 8)=  177.0000  B2( 8)=   -104.3906  B3( 8)=     -1.1563  B4( 8)=    2.0213
B1( 9)=   97.0000  B2( 9)=     36.5000  B3( 9)=     -0.2031  B4( 9)=    0.3114
B1(10)=   98.0000  B2(10)=     36.7773  B3(10)=      0.0313  B4(10)=   -0.0652
```

# FIG.11b

EP 0 585 991 B1

```
Area : -45 - -90
C1( 0)=    98.0000  C2( 0)=    36.7773  C3( 0)=   -0.0313  C4( 0)=    0.0652
C1( 1)=    97.0000  C2( 1)=    36.5000  C3( 1)=    0.2031  C4( 1)=   -0.3114
C1( 2)=   177.0000  C2( 2)= -104.3906  C3( 2)=    1.1563  C4( 2)=   -2.0213
C1( 3)=   152.0000  C2( 3)= -160.7148  C3( 3)=    0.1250  C4( 3)=   -0.8573
C1( 4)=    90.0000  C2( 4)=    58.4688  C3( 4)=    1.0156  C4( 4)=    0.5882
C1( 5)=   410.0000  C2( 5)=   -66.8242  C3( 5)=    3.0781  C4( 5)=   -0.6682
C1( 6)=   194.0000  C2( 6)=    73.2813  C3( 6)=   -0.7031  C4( 6)=    0.8980
C1( 7)=   137.0000  C2( 7)=   -78.3906  C3( 7)=    0.2656  C4( 7)=   -1.8188
C1( 8)=   226.0000  C2( 8)= -174.8047  C3( 8)=    0.4688  C4( 8)=   -1.0740
C1( 9)=   140.0000  C2( 9)=   -19.8242  C3( 9)=   -0.4063  C4( 9)=    0.4951
C1(10)=   121.0000  C2(10)=     8.0547  C3(10)=   -0.3750  C4(10)=    0.4266
```

# FIG.11 c

EP 0 585 991 B1

FIG.12

EP 0 585 991 B1

```
A1(  0)=   119.0000   A2(  0)=    10.4805
A1(  1)=   124.0000   A2(  1)=     3.3047
A1(  2)=   164.0000   A2(  2)=   -69.6953
A1(  3)=   137.0000   A2(  3)=   -64.1680
A1(  4)=   134.0000   A2(  4)=    37.4375
A1(  5)=   255.0000   A2(  5)=     0.0000
A1(  6)=   134.0000   A2(  6)=    37.4375
A1(  7)=   137.0000   A2(  7)=   -64.1680
A1(  8)=   164.0000   A2(  8)=   -69.6953
A1(  9)=   124.0000   A2(  9)=     3.3047
A1(10)=   119.0000   A2(10)=    10.4805
```

FIG.13a

```
Area : 45 - -45
A3( 0)=   128.0000    A4( 0)=      0.3125
A3( 1)=   130.0000    A4( 1)=      0.0000
A3( 2)=   128.0000    A4( 2)=      0.5469
A3( 3)=   130.0000    A4( 3)=      0.0000
A3( 4)=   128.0000    A4( 4)=      1.6250
A3( 5)=   255.0000    A4( 5)=      0.0000
A3( 6)=   128.0000    A4( 6)=     -1.6250
A3( 7)=   130.0000    A4( 7)=      0.0000
A3( 8)=   128.0000    A4( 8)=     -0.5469
A3( 9)=   130.0000    A4( 9)=      0.0000
A3(10)=   128.0000    A4(10)=     -0.3125

Area : 45 - 90
B3( 0)=   137.0000    B4( 0)=      0.1875
B3( 1)=   133.0000    B4( 1)=     -0.0469
B3( 2)=   144.0000    B4( 2)=      0.3125
B3( 3)=   133.0000    B4( 3)=     -0.0469
B3( 4)=   178.0000    B4( 4)=      0.9063
B3( 5)=   407.0000    B4( 5)=     -3.0313
B3( 6)=    78.0000    B4( 6)=     -0.9063
B3( 7)=   133.0000    B4( 7)=     -0.0469
B3( 8)=   112.0000    B4( 8)=     -0.3125
B3( 9)=   133.0000    B4( 9)=     -0.0469
B3(10)=   119.0000    B4(10)=     -0.1875

Area : -45 - -90
C3( 0)=   119.0000    C4( 0)=      0.1875
C3( 1)=   133.0000    C4( 1)=      0.0469
C3( 2)=   112.0000    C4( 2)=      0.3125
C3( 3)=   133.0000    C4( 3)=      0.0469
C3( 4)=    78.0000    C4( 4)=      0.9063
C3( 5)=   407.0000    C4( 5)=      3.0313
C3( 6)=   178.0000    C4( 6)=     -0.9063
C3( 7)=   133.0000    C4( 7)=      0.0469
C3( 8)=   144.0000    C4( 8)=     -0.3125
C3( 9)=   133.0000    C4( 9)=      0.0469
C3(10)=   137.0000    C4(10)=     -0.1875
```

FIG.13b